# EUROPÄISCHE PATENTSCHRIFT

(11) **EP 3 559 087 B1**
(45) Veröffentlichungstag und Bekanntmachung des Hinweises auf die Patenterteilung: **18.03.2026**
(21) Anmeldenummer: 17835823.0
(22) Anmeldetag: 15.12.2017
(51) Int. Cl.: C08G 69/48

(54) **VERFAHREN ZUR ERNIEDRIGUNG DER KRISTALLISATIONSTEMPERATUR VON TEILKRISTALLINEN POLYAMIDEN, HIERDURCH HERGESTELLTE POLYAMIDFORMMASSE SOWIE VERWENDUNG ORGANISCHER PHOSPHORVERBINDUNGEN ZUR ERNIEDRIGUNG DER KRISTALLISATIONSTEMPERATUR**
METHOD FOR LOWERING THE CRYSTALLIZATION TEMPERATURE OF SEMICRYSTALLINE POLYAMIDES, POLYAMIDE MOLDING COMPOUND PRODUCED THEREBY, AND USE OF ORGANIC PHOSPHORUS COMPOUNDS TO LOWER THE CRYSTALLIZATION TEMPERATURE
PROCÉDÉ DESTINÉ À ABAISSER LA TEMPÉRATURE DE CRISTALLISATION DE POLYAMIDES PARTIELLEMENT CRISTALLINS, MÉLANGE À MOULER DE POLYAMIDES FABRIQUÉS PAR CE PROCÉDÉ, ET UTILISATION DE COMPOSÉS ORGANOPHOSPHORÉS POUR ABAISSER LA TEMPÉRATURE DE CRISTALLISATION

(30) Priorität: 21.12.2016 DE 102016225777
(43) Veröffentlichungstag der Anmeldung: 30.10.2019
(73) Patentinhaber: Fraunhofer-Gesellschaft zur Förderung der angewandten Forschung e.V., 80686 München (DE)
(72) Erfinder: GROOS, Benjamin, 64289 Darmstadt (DE); PFAENDNER, Rudolf, 64668 Rimbach (DE)
(74) Vertreter: Pfenning, Meinig & Partner mbB
(86) Internationale Anmeldenummer: PCT/EP2017/083118
(87) Internationale Veröffentlichungsnummer: WO 2018/114708

(56) Entgegenhaltungen:
- EP-A1- 0 770 104
- WO-A1-2016/091807
- DE-A1- 3 821 325
- US-A- 4 417 032
- RYBNIK�R FRANTISEK ET AL: "Interactions at the PA-6/PA-66 interface", JOURNAL OF APPLIED POLYMER SCIENCE, vol. 46, no. 5, 15 October 1992 (1992-10-15), New York, pages 797 - 803, XP93121739, ISSN: 0021-8995, DOI: 10.1002/app.1992.070460507

## Beschreibung

Thermoplastische Kunststoffe liegen entweder in amorpher oder (teil-)kristalliner Form vor. In amorphen Kunststoffen sind die Polymerketten ungeordnet. Amorphe Polymere wie z.B. Polystyrol, PVC oder Polycarbonat sind häufig transparent, glänzend, mechanisch spröde und weisen oft eine geringe chemische Beständigkeit auf. Bei der Verarbeitung im Schmelzprozess ist die Fließfähigkeit vergleichsweise eher niedrig, jedoch ist z.B. die Schwindung eines mit diesen amorphen Kunststoffen hergestellten Formteils gering, d.h. von Vorteil. Bei (teil-)kristallinen Kunststoffen sind die Polymerketten in sogenannten Lamellen in geordneter Weise aneinandergelagert. (Teil-)kristalline Polymere wie Polypropylen, Polyester oder Polyamid sind meist opak mit einem zähen, harten mechanischen Verhalten und guter chemischer Beständigkeit. Die Fließfähigkeit bei der Schmelzverarbeitung ist häufig hoch, aber die Schwindung im Formteil ausgeprägt. Teilkristalline Polymere weisen neben kristallinen Bereichen auch eine amorphe Phase auf. Die Eigenschaften von teilkristallinen Polymeren werden dann u.a. vom Anteil der Kristallite im Verhältnis zu den amorphen Anteilen, dem sogenannten Kristallisationsgrad, der Form der Kristallite (sog. Sphärolite), der Größe, der Anzahl und der Verteilung der Kristallite in der amorphen Matrix bestimmt.

Um bestimmte Eigenschaften von Kunststoffen bei der Verarbeitung und in der Anwendung gezielt anzupassen, kann dann u.a. das Kristallisationsverhalten von Kunststoffen durch die Verarbeitungsbedingungen, aber auch mit entsprechenden Additiven beeinflusst werden. Beispielsweise werden häufig sogenannte Nukleierungsmittel (oder Keimbildner) dem Kunststoff zugegeben. Diese Zusätze können dann die Zykluszeiten im Herstellungsprozess verringern, die Transparenz des Kunststoffs erhöhen, die mechanischen Eigenschaften und die Wärmeformbeständigkeit verbessern (siehe z.B. J. Kurja, N. A. Mehl, Nucleating agents for semi-crystalline polymers in Plastics Additives Handbook, 6th Edition, H. Zweifel, R. D. Maier, M. Schiller (Herausgeber), München 2009, Seite 967-990). Als Nukleierungsmittel wird eine Vielzahl an chemischen Substanzklassen eingesetzt wie z.B. Sorbitolderivate, Metallphosphate oder Arylamide in Polypropylen, Alkalimetallsalze wie z.B. Natriumbenzoat in Polyethylenterephthalat (PET) und Talk oder Erdalkalisalze von Adipinsäure bei Polyamiden. Die Auswahl geeigneter Nukleierungsmittel erfolgt gemäß dem Polymeren, seiner chemischen Struktur und seinem Kristallisationsverhalten. Physikalische und chemische Vorgänge der Nukleierung von Polymeren sind z.B. in J. P. Mercier, Pol. Eng. Sci. 1990, 30, 270-278 beschrieben.

Andererseits kann es auch für bestimmte Anwendungen erwünscht sein, die Kristallisation von teilkristallinen Polymeren zu verhindern oder zu verzögern. Allerdings gibt es hierzu nur sehr wenige Additive, die dies bewirken können. Bei Polyestern wird beispielsweise die Kristallisation durch Zugabe von SAN oder Polystyrol eingeschränkt (R. M. R. Wellen, M. S. Rabello, J. Appl. Pol. Sci. 2009, 114, 1884-1895, R. M. R. Wellen, M. S. Rabello, J. Appl. Pol. Sci. 2010, 116, 1077-1078, R. M. R. Wellen. E. L. Canedo, M. S. Rabello, J. Appl. Pol. Sci. 2012, 125, 2701-2710), bei Polyamiden werden aromatische Verbindungen (US 2005/0234159) u.a. für diesen Zweck vorgeschlagen.

Zur Herstellung von (teil-)kristallinen Polymeren insbesondere Polyamiden mit verzögerter Kristallisation bzw. erniedrigtem Kristallisationspunkt wurden verschiedene Substanzklassen untersucht wie z.B. polycyclische Aromaten (US 2005/0234159), darunter vor allem Farbstoffe wie Nigrosin oder diverse Metallsalze (DE 2012105, DE 2229803) wie z.B. Lithiumsalze oder Calciumchlorid. Angaben dazu sind in der eigenen Anmeldung WO 2016/091807 enthalten, die eine verbesserte Ausführungsform für ein Polyamid mit verzögerter Kristallisation in der Kombination von Azinfarbstoffen mit Metallsalzen beschreibt.

Phosphite und Phosphonite sind als Verarbeitungsstabilisatoren und sogenannte sekundäre Antioxidantien bekannt und werden in vielen Polymeren eingesetzt. Mechanistisch erfolgt bei dieser Wirkung eine Reaktion mit den im oxidativen Abbau auftretenden Hydroperoxiden, so dass das Hydroperoxid reduziert und das Phosphit/Phosphonit zum entsprechenden Phosphat/Phosphonat oxidiert wird. Dieser gut belegte Mechanismus ist grundsätzlich unabhängig von der Struktur des jeweiligen Phosphites/Phosphonites.

Es ist jedoch bisher nicht bekannt, dass ausgewählte Phosphite/Phosphonite oder Phosphate mit mindestens 3 Substituenten über eine Umesterungs/Umamidierungsreaktion zu verzweigten Polyamiden mit reduzierter Kristallisationstemperatur oder einem verzögerten Kristallisationsverhalten führen.

EP 0407926 beschreibt Phosphorverbindungen als Kristallisationsverzögerer in Polyphenylenetherformmassen. Beispielhaft wird hier Polyphenylensulfid als teilkristallines Polymeres beschrieben. Es handelt sich hierbei allerdings um eine vollständig andere Polymerstruktur, eine Folgerung auf eine Antinukleierungswirkung auf Polymere anderer Struktur ist damit nicht möglich. Zusätzlich führt hier die Zugabe des Phosphites einer bestimmten Struktur zu einer deutlichen Erhöhung der Kristallinität (erkennbar aus dem erhöhten Wärmeübergang in Tabelle 1 bei Zusatz der Phosphorverbindung), d.h. der Zusatz wirkt hier in gegenteiliger Form als Nukleierungsmittel.

In EP 0633287 wird die Transparenzverbesserung von Polypropylen durch den Zusatz von Phosphoniten/Phosphiten beschrieben, wobei diese als Nukleierungsmittel wirken. Es kann darauf weder auf ein Verhalten dieser Substanzen in Polyamid geschlossen werden, noch ist es vorhersehbar, dass dort die gegenteilige Wirkung nämlich eine Antinukleierung eintritt.

DE 3821325 beschreibt Polyamid-Formmassen mit verbesserter Transluzenz. Hier erfolgt die Zugabe der Phosphorverbindung ohne dass die Verarbeitungseigenschaften (Schmelzviskositäten) beeinflusst werden. Es wird daher keine Verzweigung der Polyamidstruktur erhalten, die Wirkung der Phosphorverbindung ist nukleierend.

EP 0770104 betrifft die Verwendung von Diphosphoniten zum Molekulargewichtsaufbau von Polykondensationspolymeren bzw. Kombinationen mit reaktiven difunktionellen Verbindungen vorzugsweise für Rezyklate, die aufgrund von Vorschädigungen entsprechende Endgruppen aufweisen. Hinweise auf die Herstellung von verzweigten Strukturen oder auf eine Erniedrigung der Kristallisationstemperatur sind dem Patent nicht zu entnehmen.

Y. Shu, L. Ye, T. Yang, J. Appl. Pol. Sci. 110 (2008), 945-958, Study on the longterm thermal-oxidative aging behavior of polyamide 6 vergleichen die Alterung von Polyamid-6 mit und ohne einer Stabilisatormischung. Die eingesetzte Stabilisatormischung enthält u.a. ein Phosphit. Im Vergleich stabilisiert/nicht stabilisiert ergibt sich bei den Daten zur Kristallinität kein Einfluss auf die Kristallisationstemperatur, bei Lagerung ergibt sich in Anwesenheit der Additive sogar eine Erhöhung der Kristallisationstemperatur. Überraschenderweise findet man dagegen bei dem erfindungsgemäßen Verfahren eine Erniedrigung der Kristallisationstemperatur.

X. Meng et al., Pol. Degr. Stab. 120 (2015), 283-289 beschreiben die Reaktion von Polymilchsäure (PLA) mit Phosphiten und auch eine Erniedrigung der Kristallisation beschrieben. Es handelt sich bei PLA um einen Polyester und um kein Polyamid. Die Kristallisation wird jedoch durch den Zusatz beschleunigt und der resultierende Kristallisationsgrad ist höher.

B. Jacques et al. beschreiben in Polymer 37 (1996), 1189-1200, Polymer 37 (1996), 4085-4097 und Polymer 38 (1997), 5367-5377 die Reaktion von Polyestern u.a. mit Triphenylphosphit in der Schmelze. Dabei wird nach der Reaktion eine Erniedrigung der Kristallisationstemperatur gefunden, die sich jedoch nach Lagerung erhöht und dann sogar den Wert des Polyesters ohne Zusatz übersteigt. Ein wesentliches Element für den dort gefundenen Molekulargewichtsaufbau ist die Reaktion mit OH-Endgruppen. Bei Polyamiden sind jedoch keine OH-Endgruppen vorhanden, sondern -NH₂₋Endgruppen. Über das Verhalten eines Phosphits in Polyamid ist in diesem Artikel kein Hinweis vorhanden.

F.P. La Mantia et al. beschreiben in J. Appl. Pol. Sci. 86 (2002), 1899-1903 das Recycling von Polyamiden. Hier erfolgt der Zusatz eines Diphosphonits im Vergleich Neuware, Rezyklat, feucht und trocken. Das Diphosphonit wirkt als Stabilisator bzw. als Trocknungsmittel, es erfolgt keine Molekulargewichtserhöhung, der Kristallisationsgrad ist höher als bei der Neuware.

Die bisher als Antinukleierungsmittel bei Polyamiden beschriebenen Zusätze auf der Basis von Farbstoffen oder polycyclischen Verbindungen haben jedoch den Nachteil, dass das resultierende Polyamid gefärbt ist. Insbesondere das vorzugsweise gut wirksame Antinukleierungsmittel Nigrosin allein oder in synergistischen Kombinationen führt selbst in geringen Konzentrationen zu einem schwarzen Produkt. Für den Hersteller von Polyamidteilen ist es jedoch vorteilhaft keine Einschränkung in der Farbgebung zu haben.

US 4,417,032 A offenbart ein Verfahren zur Herstellung von quasi-zufälligen Copolymeren, das das Erhitzen einer Mischung von Polyamiden in Gegenwart eines oder mehrerer Phosphitpromotoren beinhaltet. Das Verfahren wird bei Temperaturen zwischen etwa 265 °C und 315 °C durchgeführt, wobei die Verfahrensdauer im Allgemeinen zwischen etwa 2 und etwa 20 Minuten liegt. Das Verfahren eignet sich insbesondere zur Herstellung von Copolymeren aus einer Mischung von Poly(caproamid) und Poly(hexamethylenadipamid). Die nach dem Verfahren hergestellten Copolymerprodukte eignen sich besonders für die Herstellung von Kunststofffolien, die im Vergleich zu den beiden Homopolymeren verbesserte Eigenschaften aufweisen.

EP 0 770 104 A1 bezieht sich auf ein Verfahren zur Erhöhung des Molekulargewichts von Polykondensaten und auf die durch dieses Verfahren erhältlichen Polykondensate.

DE 38 21 325 A1 betrifft Polyamid-Formmassen mit verbesserter Transluzenz, enthaltend A) 80 bis 99,95 Gew.-% eines thermoplastischen Polyamids, B) 0,05 bis 1,0 Gew.-% einer spezifischen, näher bezeichneten Phosphorverbindung sowie außerdem C) 0 bis 19,95 Gew.-% von B) verschiedene Additive und Verarbeitungshilfsmittel.

WO 2016/091807 A1 betrifft eine Polymerzusammensetzung mit verzögertem Kristallisationsverhalten, das Kristallisationsverhalten beeinflussende Additivzusammensetzung, Verfahren zur Herabsetzung des Kristallisationspunktes und/oder der Kristallisationsgeschwindigkeit sowie Verwendung einer Additivzusammensetzung.

Ausgehend hiervon ist es daher Aufgabe der vorliegenden Erfindung, teilkristalline Polyamide mit Kristallisationsverzögerung bzw. mit einem erniedrigten Kristallisationspunkt und ein Verfahren zur Herstellung dieser Polyamide zur Verfügung zu stellen, die im Wesentlichen farblos (weiß) sind und damit eine gewünschte Farbgebung für die Anwendung nicht beeinträchtigen.

Diese Aufgabe wird hinsichtlich eines Verfahrens zur Erniedrigung der Kristallisationstemperatur von teilkristallinen Polyamiden mit den Merkmalen des Patentanspruchs 1, bezüglich der Verwendung von mehrfunktionellen umesterungsfähigen organischen Phosphoniten, Phosphiten, Phosphaten und/oder Mischungen hiervon zur Erniedrigung der Kristallisationstemperatur bzw. zur Vernetzung und/oder Verzweigung von teilkristallinen Polyamiden mit den Merkmalen des Patentanspruchs 10 sowie einer Polyamidformmasse, die sich insbesondere gemäß dem erfindungsgemäßen Verfahren herstellen lässt.

Die vorliegende Erfindung betrifft somit in einem ersten Aspekt ein Verfahren zur Erniedrigung der Kristallisationstemperatur von teilkristallinen Polyamiden, bei dem
a) mindestens ein teilkristallines Polyamid oder Mischungen aus mindestens zwei teilkristalliner Polyamide mit mindestens einen mehrfunktionellen umesterungsfähigen organischen Phosphonit, organischen Phosphit, organischen Phosphat oder Mischungen aus mindestens zwei der zuvor genannten Verbindungen vermischt wird,
b) die gebildete Mischung in eine Schmelze überführt wird, wobei eine Umesterung des mindestens einen mehrfunktionellen umesterungsfähigen organischen Phosphonit, organischen Phosphit, organischen Phosphat oder Mischungen aus mindestens zwei der zuvor genannten Verbindungen unter gleichzeitiger Umamidierung des mindestens einen teilkristallinen Polyamids erfolgt, sowie abschließend
c) das Gemisch abgekühlt wird.

Überraschenderweise wurde gefunden, dass durch Zugabe von mehrfunktionellen umesterungsfähigen organischen Phosphoniten, Phosphiten, Phosphaten bzw. Mischungen hiervon die Kristallisationstemperatur von teilkristallinen Polyamiden erniedrigt werden kann. Dies steht völlig überraschend im Gegensatz zu aus dem Stand bekannten Erkenntnissen bei anderen thermoplastischen Polymersystemen. Die zuvor diskutierte EP 0 407 926 zeigt beispielsweise bei Zugabe von analogen Phosphorverbindungen zu Polyphenylenetherformmassen eine Wirkung entsprechender Phosphorverbindungen als Nukleierungsmittel. Auch bei Polymilchsäuren wurde eine Beschleunigung der Kristallisation durch Zugabe entsprechender Phosphite beobachtet (X. Meng et al.).

Eine bevorzugte Ausführungsform des erfindungsgemäßen Verfahrens sieht vor, dass das mindestens eine mehrfunktionelle umesterungsfähige organische Phosphonit, organische Phosphit, organische Phosphat oder Mischungen hiervon bezogen auf die Gesamtmenge des mindestens einen teilkristallinen Polyamids in einer Menge von 0,05 bis 10 Gew.-%, bevorzugt 0,1 bis 5 Gew.-%, besonders bevorzugt 0,4 bis 4 Gew.-% eingesetzt wird.

Weiter vorteilhaft ist, wenn das mindestens eine mehrfunktionelle umesterungsfähige organische Phosphonit, organische Phosphit und/oder organische Phosphat 3 bis 6, bevorzugt 3 bis 4 umesterungsfähige Funktionalitäten aufweist.

Insbesondere weist das mindestens eine mehrfunktionelle umesterungsfähige organische Phosphonit, organische Phosphit und/oder organische Phosphat ein Molekulargewicht von mindestens 600 g/mol auf.

Das mindestens eine mehrfunktionelle umesterungsfähige organische Phosphonit, organische Phosphit und/oder organische Phosphat ausgewählt ist aus der Gruppe bestehend aus den nachfolgend abgebildeten Verbindungen

(O)_{y}P(OR)₃,

[(RO)₂(O)_{y}P-O]_{z}X

[(RO)₂P]_{z}X

wobei jeweils unabhängig voneinander
- y: 0 oder 1 ist,
- z: 2, 3 oder 4 ist,
- R: bei jedem Auftreten gleich oder verschieden ist und ausgewählt ist aus der Gruppe bestehend aus linearen oder verzweigten Alkylresten, unsubstituierten oder substituierten aromatischen Resten, wobei jeweils zwei an demselben Phosphoratom angeordnete Reste (OR) auch über eine kovalente Bindung miteinander verbunden sein können, sowie
- X: ein z-wertiger Rest, der ausgewählt ist aus der Gruppe bestehend aus linearen oder verzweigten, ggf. heterosubstituierten Alkylresten, unsubstituierten oder substituierten aromatischen Resten.

Vorzugsweise sind bei den zuvor genannten Verbindungen jeweils unabhängig voneinander
- R: 2,4-di-tert-Butylphenoxy, 2,6-di-tert-Butyl-4-methylphenoxy, 2,4-di-((1-methyl-1-phenyl)ethyl)phenoxy oder im Falle, dass zwei an demselben Phosphoratom angeordnete Reste (OR) auch über eine kovalente Bindung miteinander verbunden sind 3,3',5,5'-tetra-tert-butylbiphenyl-2,2'-dioxy ist, und
- X: ausgewählt ist aus der Gruppe bestehend aus 4,4'-Biphenyl, - (CH₂)₄C und Tri(2-ethyl)aminyl.

Bevorzugte organische Phosphite sind dabei ausgewählt aus der Gruppe bestehend aus Triphenylphosphit, Tri(nonylphenyl)phosphit, Trilaurylphosphit, Trioctadecylphosphit, (2,4-Di-*tert*-butylphenyl)diethylphosphit, Tris-(2,4-di-*tert*-butylphenyl)phosphit, Tristearylsorbitoltriphosphit, Bis-(2,4-di-tert-butyl-6-methylphenyl)phosphit, Bis-(2,6-di-*tert*-butyl-4-methylphenyl)phosphit, 2,2',2''-Nitrilo[triethyltris(3,3',5,5'-tetra-*tert*-butyl-1,1'-biphenyl-2,2'-diyl)-phosphit], 2-Ethylhexyl(3,3',5,5'-tetra-*tert*-butyl-1,1'-biphenyl-2,2'-diyl)-phosphit, 3,9-Bis(2,4-di-*tert*-butylphenoxy)-2,4,8,10-tetraoxa-3,9-diphosphaspiro[5.5]undecan, 3,9-Bis(2,4-dicumylphenoxy)-2,4,8,10-tetraoxa-3,9-diphosphaspiro[5.5]undecan, 3,9-Bis[4-methyl-2,6-bis(2-methyl-2-propanyl)phenoxy]-2,4,8,10-tetraoxa-3,9-diphosphaspiro[5.5]undecan sowie Mischungen und Kombinationen hiervon,

Bevorzugte Phosphonite sind ausgewählt aus der Gruppe bestehend aus Tetrakis-(2,4-di-*tert*-butylphenyl)-4,4'-biphenyldiphosphonit, Tetrakis-(2,4-dimethylphenyl)-4,4'-biphenyldiphosphonit, Tetrakis(2,4-bis(1,1-dimethylpropyl)phenyl)-4,4'-biphenyldiphosphonit, sowie Mischungen hiervon,

Bevorzugte organische Phosphate sind dabei ausgewählt aus der Gruppe bestehend aus Tris(octadecyl)phosphat, Tris(dodecyl)phosphat, sowie Mischungen hiervon.

Der Mischung wird bevorzugt ein Umesterungskatalysator, bevorzugt Zinn-, Antimon- und/oder Titanverbindungen, wie z.B. Zinn-(II)-octoat zugesetzt.

Es können auch Mischungen aus mehreren Umesterungskatalysatoren zugesetzt werden.

Gemäß einer bevorzugten Ausführungsform wird in Schritt b) sowohl das mindestens eine teilkristalline Polyamid als auch das mindestens eine mehrfunktionelle umesterungsfähige organische Phosphonit, organische Phosphit und/oder organische Phosphat geschmolzen.

Schritt b) wird bevorzugt bei Temperaturen von 230 bis 350 °C, bevorzugt 240 und 310 °C, besonders bevorzugt 270 bis 300 °C und/oder über einen Zeitraum von 0,5 bis 60 min, bevorzugt 2 bis 10 min durchgeführt.

Bevorzugterweise wird das mindestens eine teilkristalline Polyamid ausgewählt aus der Gruppe bestehend aus
aliphatischen Polyamiden, insbesondere PA 6, PA 66, PA610, PA 46, PA 410, PA 612, PA 1212, PA 1010, PA 10/12, PA 10, PA 11, PA 12,
teilaromatischen Polyamiden, abgeleitet von aromatischen Dicarbonsäuren , wie z.B. Terephthalsäure und/oder Isophthtalsäure und aliphatischen Diaminen, wie z.B. Hexamethylendiamin, oder
teilaromatischen Polyamiden, abgeleitet von aliphatischen Dicarbonsäuren, wie z.B. Adipinsäure und/oder Sebazinsäure und aromatischen Diaminen, wie z.B. 1,3- und/oder 1,4-Diaminobenzol, oder
Polyamidimiden, abgeleitet von Tricarbonsäureanhydriden wie z.B. Trimellithsäureanhydrid und Diaminen
sowie
Mischungen oder Kombinationen hiervon.

Erfindungsgemäß ist vorgesehen, dass das mindestens eine teilkristalline Polyamid zumindest teilweise oder vollständig endgruppenblockiert ist.

Ebenso ist es von Vorteil, wenn das mindestens eine teilkristalline Polyamid eine Aminoendgruppenkonzentration von < 30 meq/kg und/oder eine Carbonsäureendgruppenkonzentration von < 30 meq/kg aufweist.

Besonders bevorzugte Polyamide sind Polyamid-6 und Polyamid-6.6 sowie deren Mischungen.

Die genannten Polymeren können dabei nicht nur als Neuware sondern auch in Form von Rezyklaten vorliegen, z.B. als Produktionsabfälle oder aus Wertstoffsammlungen ("post-consumer" Rezyklate), Neuware ist jedoch bevorzugt, da beim Rezyklat durch eine Vorschädigung wie z.B. durch Hydrolyse freie Endgruppen vorliegen.

Bevorzugte Polyamide sind endgruppen-blockiet, d.h. sie weisen keine oder nur eine geringe Anzahl von Amin- und/oder Säureendgruppen auf. Hierdurch erfolgt ein Molekulargewichtsaufbau über die Endgruppen nicht oder nur untergeordnet und die Umesterungs/Umamidierungsreaktion ist bevorzugt. Insbesondere Säureendgruppen sind zu vermeiden, da Säuregruppen z.B. mit Triphosphiten unter Bildung der Phenylester und von Phosphonaten reagieren, dann eine bifunktionelle Verbindung vorliegt und damit keine Verzweigung mehr möglich ist.

Mehrfuntionelle umesterungsfähige Phosphonite und/oder Phosphite und oder Phosphate weisen in der Regel 3-6 ggfs. substituierte Phenoxygruppen, bevorzugt 3-4 ggfs. substituierte Phenoxygruppen an der Phosphorgruppe auf. 2 Umesterungsfähige Gruppen sind unzureichend, da hier keine Verzweigung stattfindet, sondern die Linearität des Polyamids unter den Verfahrensbedingungen erhalten bleibt, bei einer höheren Zahl an Phenoxygruppen und erhöhten Konzentrationen besteht die Gefahr einer Vernetzung der Polymerketten, die häufig unerwünscht ist, da damit das Verarbeitungsverhalten negativ beeinflusst wird.

Besonders bevorzugte Phosphite/Phosphonite sind:

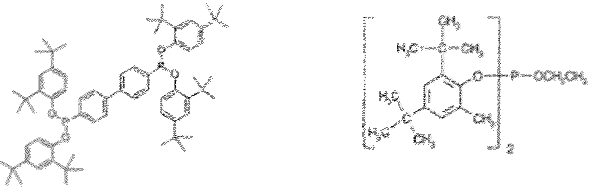

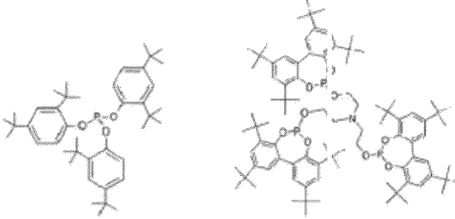

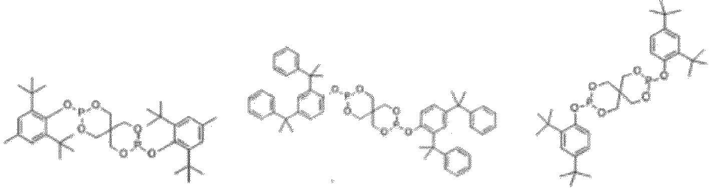

Beispiel für ein Phosphat ist Tris(octadecyl)phosphat.

Weiterhin wird das Phosphit/Phosphonit/Phosphat so ausgewählt, dass es bei der notwendigen Schmelztemperatur des Polymeren keine oder nur eine geringe Flüchtigkeit aufweist, bevorzugt sind daher Phosphite/Phosphonite/Phosphate mit einem Molekulargewicht von mindestens 600 g/mol.

Die Herstellung des erfindungsgemäßen Polyamids in der Schmelze kann grundsätzlich in jedem beheizbaren Reaktionsgefäß oder in einer Verarbeitungsmaschine wie z.B. Kneter oder Extruder erfolgen. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Vakuumentgasung hat den Vorteil, dass dabei unerwünschte Nebenprodukte der Umesterung/Umamidierungsreaktion aus dem Polymeren entfernt werden können. Die Verarbeitung kann dabei unter Luft oder ggfs. unter Inertgasbedingungen erfolgen.

Die vorliegende Erfindung betrifft zudem die Verwendung von mehrfunktionellen umesterungsfähigen organischen Phosphoniten, organischen Phosphiten, organischen Phosphaten oder Mischungen aus mindestens zwei der zuvor genannten Verbindungen zur Erniedrigung der Kristallisationstemperatur von teilkristallinen Polyamiden und/oder zur Vernetzung und/oder Verzweigung von teilkristallinen Polyamiden.

Ein weiterer Aspekt der vorliegenden Erfindung betrifft eine Polyamidformmasse, umfassend ein durch Reaktion mindestens eines mehrfunktionellen umesterungsfähigen organischen Phosphonits, organischen Phosphiten, organischen Phosphaten oder Mischungen aus mindestens zwei der zuvor genannten Verbindungen und mindestens eines teilkristallinen Polyamid erhaltenen Reaktionsproduktes, wobei bei der Reaktion eine Umesterung des mindestens einen mehrfunktionellen umesterungsfähigen organischen Phosphonits, organischen Phosphits, organischen Phosphats oder Mischungen aus mindestens zwei der zuvor genannten Verbindungen bei gleichzeitiger Umamidierung mindestens eines teilkristallinen Polyamids erfolgt.

Die erfindungsgemäße Polyamidformmasse kann insbesondere mittels des eingangs beschriebenen erfindungsgemäßen Verfahrens hergestellt werden.

Vorzugsweise stellt das erhaltene Reaktionsprodukt ein verzweigtes Polyamid dar.

Zusätzlich kann die erfindungsgemäße Polyamidformmasse Zusatzstoffe, ausgewählt aus der Gruppe bestehend aus UV-Absorbern, Lichtstabilisatoren, Stabilisatoren, Hydroxylaminen, Benzofuranen, Metalldesaktivatoren, Füllstoffdesaktivatoren, Flammschutzmittel, Schlagzähigkeitsverbesserer, Weichmacher, Gleitmittel, Rheologiemodifikatoren, Verarbeitungshilfsmittel, Pigmenten, Farbstoffen, Füllstoffen, Verstärkungsstoffen, optischen Aufhelleren, antimikrobiellen Wirkstoffen, Antistatika, Slipmitteln, Antiblockmitteln, Kopplungsmitteln, Dispergiermitteln, Kompatibilisatoren, Sauerstofffängern, Säurefängern, Markierungsmitteln, Antifoggingmittlen sowie Mischungen und Kombinationen aus mindestens zwei der zuvor genannten Zusatzstoffen enthalten.

Insbesondere ist die erfindungsgemäße Polyamidformmasse frei von Nukleierungsmitteln, wie beispielsweise Talk oder Natriumbenzoat.

Weiter bevorzugt ist die erfindungsgemäße Polyamidformmasse frei von Nigrosin.

In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat oder von Hydrotalciten und/oder Stabilisatoren aus der Gruppe der phenolischen Antioxidantien und/oder Kupferverbindungen und/oder Metalldesaktivatoren und/oder Lichtstabilisatoren aus der Gruppe der gehinderten Amine (HALS) und/oder Dispergiermittel und/oder Flammschutzmittel und/oder Pigmente und/oder Füllstoffe/Verstärkungsstoffe.

Geeignete phenolische Antioxidantien sind beispielsweise: Octadecyl-3-(3,5-di-*tert*-butyl-4-hydroxyphenyl)propionat, Pentaerythritol-tetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Weitere geeignete Stabilisatoren sind aminische Antioxidantien, wie z. B. N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylen-diamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylaminophenol, 4-Octa-decanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenyl-methan, 1,2-Bis[(2-methylphenyl)amino]ethan, 1,2-Bis(phenylamino)-propan, (o-Tolyl)biguanid, Bis[4-(1',3'-dimethylbutyl)phenyl]amin, *tert*-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron.

Weitere geeignete Stabilisatoren sind Thiosynergisten. Geeignete Thiosynergisten sind beispielsweise Distearylthiodipropionat, Dilauryldipropionat.

Weitere besonders geeignete Stabilisatoren für Polyamide sind Kupfersalze wie z.B. Halogenide, Oxide oder Komplexe, wie z.B. Kupfer(I)oxid, Kupfer(I)thiocyanat, Kupfer(I)chlorid, Kupfer(I)bromid, Kupfer(l)iodid, Carbonsäurezalze wie Kupfer(I)acetat, Kupfer(I)stearat, Kupfer(l)oxalat und Komplexe mit den Liganden Triphenylphosphin, Mercaptobenzimidazol, Acetylacetonat, Bipyridyl oder Glycin.

Weitere geeignete Stabilisatoren für Polyamide sind Silber(I)-Salze wie z.B. Ag₂O, AgBr oder Agl.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxy-piperidin und Succinsäure, lineare oder zyklische Kondensationsprodukte von N,N'-Bis(2,2,6,6-tetramethyl-4-piperidyl)hexamethylendiamin und *4-tert-*Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butan-tetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoyl-bisphenylhydrazid, N,N'-Diacetyladipoyldihydrazid, N,N'-Bis(salicyloyl)-oxylyldihydrazid, N,N'-Bis(salicyloyl)thiopropionyldihydrazid.

### Geeignete Dispergiermittel sind beispielsweise:

Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z. B.

Polyethylen-block-Polyethylenoxid, Dendrimere, z.B. hydroxylgruppenhaltige Dendrimere.

Geeignete Flammschutzmittel sind beipsielsweise anorganischen Flammschutzmitteln wie z.B. Al(OH)₃, Mg(OH)₂, AlO(OH), Schichtsilikate wie z.B. Montmorillonit oder Sepiolit, Antimonoxide oder Zinkstannat, stickstoffhaltigen Flammschutzmitteln wie z.B. Melamincyanurat, Melaminpolyphosphat, Melamin-Metall-Phosphate wie z.B. Melaminaluminiumphosphat, Melaminzinkphosphat, Melaminmagnesiumphosphat, Radikalbildner, wie z.B. Alkoxyamine, Hydroxylaminester, Azoverbindungen, Dicumyl oder Polycumyl, Hydroxyimide oder deren Derivate wie z.B. Hydroxyimidester oder Hydroxyimidether, posphorhaltigen Flammschutzmittel wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphat, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen, Halogenhaltigen Flammschutzmittel auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexa-bromcyclododecan, bromiertes Diphenylethan, Tris-(2,3-dibrompropyl)isocyanurat, Ethylen-bis(tetrabromophthalimid), Tetrabromobisphenol-A-bis(2,3)dibromopropylether),Tetrabromo-bisphenol A, bromiertes Polystyrol, bromiertes Polybutadien bzw, Polystyrolbromiertes Polybutadien-Copolymere, bromiertes Epoxidharz, Polypentabrombenzylacrylat, bromierte Polyphenylenether, ggf. in Kombination mit Sb₂O₃ und/oder Sb₂O₅, Boraten wie z.B. Zinkborat oder Calciumborat, ggf auf Trägermaterialien wie Silica, Schwefelhaltige Verbindungen wie z.B. wie z.B. elementarer Schwefel, Disulfide und Polysulfide, Thiuramsulfid, Dithiocarbamate, Mercaptobenzthiazol und Sulfenamide, Antidrip-Mitteln wie z.B. Polytetrafluorethylen, siliciumhaltigen Verbindungen wie z.B. Polyphenylsiloxane und/oder Kohlenstoffmodifikationen wie z.B Kohlenstoff-Nanoröhren (CNT) oder Graphen.

Geeignete Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern, sowie Metallfasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit, Sepiolit.

Die vorliegende Erfindung wird anhand der nachfolgenden Beispiele näher ausgeführt, ohne die Erfindung hierauf zu beschränken.

### Beispiel 1-11, Vergleichsbeispiel 1-3: Herstellung und Prüfung von Polyamid 6-Zusammensetzungen mit verringerter Kristallisationstemperatur

Ein Polyamid 6 (Alphalon 27, Grupa Azoty ATT Polymers GmbH) wurde mit den in der Tabelle 1 angegebenen Additiven in der Schmelze gemischt. Die Verarbeitung in der Schmelze wurde mit einem gleichläufigen Doppelschneckenextruder (Thermo Scientific Process 11) durchgeführt. Die Schneckendrehzahl betrug 450 min⁻¹, bei einem Durchsatz von 800 gh⁻¹ und einer Schmelzetemperatur von 260°C. Die heiße Schmelze wurde dann in einem Wasserbad gekühlt und anschließend stranggranuliert.

Die thermische Analyse der Compounds wurde mittels dynamischer Differenzkalorimetrie (DSC) durchgeführt. Zur Untersuchung des Schmelz- und Kristallisationsverhaltens wurde eine DSC 822e (Mettler-Toledo AG) mit einem konstanten Stickstoffdurchfluss von 20 ml min⁻¹ und einer Stickstoffkühlung verwendet. Die Temperatur und der Wärmestrom wurden mit Indium und Zink kalibriert. Die Probemenge betrug immer 5 mg mit einer Abweichung von +0,1 mg. Verwendet wurde ein Aluminium-Tiegel. Die Proben wurden mit 10°Cmin⁻¹von 0°C auf 270°C erhitzt und dort für 3 min gehalten. Danach wurde die Probe mit 10°Cmin⁻¹ wieder auf 0°C abgekühlt. Zur Analyse der Kristallisationsgeschwindigkeit wurde die Peakkristallisationstemperatur T_{pc} verwendet. Der erfindungsrelevante Kennwert T_{PC} ist in Tabelle 1 für alle Beispiele dargestellt.

**Tabelle 1: Zusammensetzungen und Kristallisationstemperaturen von erfindungsgemäßen Zusammensetzungen und Vergleichsbeispielen**

| **Beispiel** | **Additiv(e)** | **Gew.[%]** | **T_{PC}[°C]** |
|---|---|---|---|
| Vergleichsbeispiel 1 | - | 0 | 186,9 |
| Vergleichsbeispiel 2 | Calciumphosphat | 0,5 | 187,5 |
| Vergleichsbeispiel 3 | Calciumphosphat | 3,0 | 187,2 |
| Erfindungsgemäßes Beispiel 1 | Phosphat | 1,5 | 181,7 |
| Erfindungsgemäßes Beispiel 2 | Phosphat | 3,0 | 181,0 |
| Erfindungsgemäßes Beispiel 3 | Phosphit A | 0,5 | 184,4 |
| Erfindungsgemäßes Beispiel 4 | Phosphit A | 1,5 | 183,6 |
| Erfindungsgemäßes Beispiel 5 | Phosphit A | 3,0 | 181,5 |
| Erfindungsgemäßes Beispiel 6 | Diphosphit A | 1,5 | 182,8 |
| Erfindungsgemäßes Beispiel 7 | Diphosphit B | 1,5 | 181,6 |
| Erfindungsgemäßes Beispiel 8 | Diphosphit C | 1,5 | 183,0 |
| Erfindungsgemäßes Beispiel 9 | Diphosphonit | 0,5 | 184,7 |
| Erfindungsgemäßes Beispiel 10 | Diphosphonit | 1,5 | 182,3 |
| Erfindungsgemäßes Beispiel 11 | Diphosphonit | 3,0 | 179,5 |

| | | | |
|---|---|---|---|
| T_{pc}: Peakkristallisationstemperatur; Gew.: Massenanteil des(der) Additiv(e) Calciumphosphat: Calciumphosphat Phosphat: Octadecyl phosphat (ADK Stab AX-71) Phosphit A: 2,4-Bis(1,1-dimethylethyl)phenol phosphit (Irgafos 168) Diphosphit A: Bis(2,4-dicumylphenyl) pentaerythritol diphosphit (Doverphos S9228) Diphosphit B: Pentaerythritol bis(2,4-di-tert-butylphenyl) diphosphit (ADK Stab PEP 24) Diphosphit C: Bis(2,6-di-tert-butyl-4-methylphenyl)pentaerythritol diphosphit (ADK Stab PEP 36) Diphosphonit: Tetrakis(2,4-di-tert-butylphenyl) 4,4'-biphenylenediphosphonit (Hostanox P-EPQ) | | | |

Die erfindungsgemäßen Beispiele zeigen überraschenderweise eine deutlich verringerte Kristallisationstemperatur im Vergleich zu den Vergleichsbeispielen ohne Zusatz.

### Beispiel 12-13, Vergleichsbeispiel 4: Herstellung und Prüfung von Polyamid 6,6-Zusammensetzungen mit verringerter Kristallisationstemperatur

Ein Polyamid 6,6 (Radipol A45, Radici Chimica S.p.A.) wurde mit den in der Tabelle 2 angegebenen Additiven in der Schmelze gemischt. Die Verarbeitung in der Schmelze wurde analog Beispiel 1 durchgeführt. Die Schmelzetemperatur betrug 285°C.

Die thermische Analyse der Compounds wurde analog Beispiel 1 durchgeführt. Die Proben wurden mit 10°Cmin⁻¹ von 0°C auf 300°C erhitzt und dort für 3 min gehalten. Danach wurde die Probe mit 10°Cmin⁻¹ wieder auf 0°C abgekühlt. Zur Analyse der Kristallisationsgeschwindigkeit wurde die Peakkristallisationstemperatur T_{PC} verwendet. Der erfindungsrelevante Kennwert T_{PC} ist in Tabelle 2 für alle Beispiele dargestellt.

**Tabelle 2: Zusammensetzungen und Kristallisationstemperaturen von erfindungsgemäßen Zusammensetzungen und Vergleichsbeispielen**

| **Beispiel** | **Additiv(e)** | **Gew.[%]** | **T_{PC}[°C]** |
|---|---|---|---|
| Vergleichsbeispiel 4 | - | 0 | 229,4 |
| Erfindungsgemäßes Beisniel 12 | Diphosphonit | 0,5 | 226,7 |
| Erfindungsgemäßes Beispiel 13 | Diphosphonit | 1,5 | 223,7 |

| | | | |
|---|---|---|---|
| T_{pc}: Peakkristallisationstemperatur; Gew.: Massenanteil des(der) Additiv(e) Diphosphonit: Tetrakis(2,4-di-tert-butylphenyl) 4,4'-biphenylenediphosphonit (Hostanox P-EPQ) | | | |

Die erfindungsgemäßen Beispiele zeigen überraschenderweise eine deutlich verringerte Kristallisationstemperatur im Vergleich zu den Vergleichsbeispielen ohne Zusatz.

### Beispiel 14, Vergleichsbeispiel 5-6 : Nachweis der Verzweigung eines Polyamid 6 durch ein Diphosphonit

Zum Nachweis einer Verzweigung des Polyamid 6 durch die Reaktion mit einem Diphosphonit während der Verarbeitung in der Schmelze wurde die scherratenabhängige Viskosität betrachtet. Ein Polyamid 6 (Alphalon 27, Grupa Azoty ATT Polymers GmbH) wurde mit dem in der Tabelle 3 angegebenen Additiv in der Schmelze gemischt. Die Verarbeitung in der Schmelze wurde analog Beispiel 1 durchgeführt. Aus den Compounds wurden Probekörper vom Typ 1A nach DIN EN ISO 527-2 hergestellt. Die Herstellung der Prüfkörper erfolgte in Anlehnung an die DIN EN ISO 294-1. Es wurde eine Klöckner Ferromatik Desma Spritzgussmaschine vom Typ FX 75-2F mit einer Schließkraft von 750 kN und einem Zylinderdurchmesser von 30 mm verwendet. Die Compounds wurden vor der Verarbeitung für 12h bei 80 °C in einem Trockenlufttrockner auf eine Restfeuchte von kleiner 0,05 Gewichts-% getrocknet. Die Schmelzetemperatur lag bei 260°C. Aus dem breiten Bereich der Probekörper wurden Scheibchen mit einem Durchmesser von 20 mm und einer Dicke von 1,6 mm ausgefräst. Die Scheibchen wurden bis zur Massekonstanz bei 80°C getrocknet, um einen Abbau des Polymers durch Hydrolyse während der rheologischen Messungen zu vermeiden. Zur Bestimmung der scherratenabhängigen Viskosität wurde ein Frequenzsweep im Frequenzbereich zwischen 10⁻¹-10³ rads⁻¹ bei einer Temperatur von 260°C durchgeführt. Der Versuch wurde mit einem ARES-Rheometer der Firma TA Instruments, ausgestattet mit einem Platte/Platte-Messsystem, durchgeführt. Der scheibchenförmige Probekörper wurde bei Erreichen der Messtemperatur durch das Zusammenfahren des Messspaltes auf eine Dicke von 1,0 mm gepresst und der Schmelzeüberschuss entfernt. Zur Vermeidung eines oxidativen Abbaus des Polymers, wurde die Messung in Stickstoffatmosphäre durchgeführt.

**Tabelle 3: Zusammensetzungen und Nullviskositäten von erfindungsgemäßen Zusammensetzungen und Vergleichsbeispielen**

| **Beispiel** | **Additiv(e)** | **Gew.[%]** | **η₀ [Pa s]** |
|---|---|---|---|
| Vergleichsbeispiel 5 | - | 0 | 174,0 |
| Vergleichsbeispiel 6 | -* | 0 | 446,4 |
| Erfindungsgemäßes Beisniel 14 | Diphosphonit | 1,5 | 519,8 |

| | | | |
|---|---|---|---|
| η₀: Nullviskosität; Gew.: Massenanteil des Additiv PA 6: Alphalon 27, *unverarbeitet Diphosphonit: Tetrakis(2,4-di-tert-butylphenyl) 4,4'-biphenylenediphosphonit (Hostanox P-EPQ) | | | |

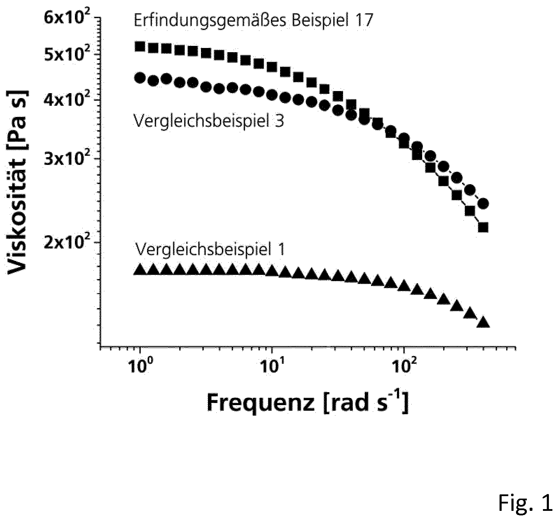

Figur 1 zeigt die scherratenabhängige Viskosität von erfindungsgemäßen Zusammensetzungen und Vergleichsbeispielen
Polyamide zeigen mit Zunahme der molaren Masse M einen Anstieg der scherratenabhängigen Viskosität über den gesamten Scherratenbereich [H. M. Laun, Rheol. Acta 18 (1979), 478-491]. Dahingegen wird durch eine Verzweigung von Polymeren vor allem die Nullviskosität, d.h. die Viskosität im Bereich kleiner Scherraten beeinflusst [J. M. Dealy, R. G. Larson, Structure and rheology of molten polymers, Carl Hanser Verlag, München 2006]. Die Art der Verzweigung und die Länge der Verzweigungen bestimmen dabei, ob die Nullviskosität steigt oder sinkt. Während bei einer sternförmigen Verzweigung der Einfluss auf die Nullviskosität von der Länge der Verzweigungen abhängt, führt eine hochverzweigte Struktur zu einer Abnahme der Nullviskosität. Durch die Einbringung eines Rückgratsegmentes, wie z.B. die Biphenyleinheit des Tetrakis(2,4-di-tert-butylphenyl) 4,4'-biphenylenediphosphonit wird die Nullviskosität im Allgemeinen erhöht und die Scherratenabhängigkeit der Viskosität des Polymers wird verstärkt. Vergleicht man nun das erfindungsgemäße Beispiel 17 mit den Vergleichsbeispielen 1 und 3 in Abbildung 1 wird ersichtlich, dass die Reaktion des Polyamid 6 mit dem Tetrakis(2,4-di-tert-butylphenyl) 4,4'-biphenylendiphosphonit zu einer "H"-förmigen Verzweigungsstruktur führt.

Additive für (teil-)kristalline thermoplastische Kunststoffe insbesondere in Form von Spritzgussteilen, Folien oder Filmen, Schäumen, Fasern, Kabeln und Rohren, Profilen, Hohlkörpern, Bändchen, Membranen, wie z.B. Geomembranen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Verpackungen, Möbel, Textilien. Eine weitere bevorzugte Anwendung der erfindungsgemäßen Zusammensetzungen sind Polymerwerkstoffe, die für "Additives Manufacturing" Verfahren eingesetzt werden, wie z.B. Lasersintern oder 3D-Druck.

## Patentansprüche

1. Verfahren zur Erniedrigung der Kristallisationstemperatur von teilkristallinen Polyamiden, bei dem
a) mindestens ein zumindest teilweise oder vollständig endgruppenblockiertes teilkristallines Polyamid oder Mischungen aus mindestens zwei teilkristalliner Polyamide mit mindestens einen mehrfunktionellen umesterungsfähigen organischen Phosphonit, organischen Phosphit, organischen Phosphat oder Mischungen aus mindestens zwei der zuvor genannten Verbindungen vermischt wird,
b) die gebildete Mischung in eine Schmelze überführt wird, wobei eine Umesterung des mindestens einen mehrfunktionellen umesterungsfähigen organischen Phosphonit, organischen Phosphit, organischen Phosphat oder Mischungen aus mindestens zwei der zuvor genannten Verbindungen unter gleichzeitiger Umamidierung des mindestens einen teilkristallinen Polyamids erfolgt, sowie abschließend
c) das Gemisch abgekühlt wird.

2. Verfahren nach Anspruch 1, **dadurch gekennzeichnet, dass** das mindestens eine mehrfunktionelle umesterungsfähige organische Phosphonit, organische Phosphit, organische Phosphat oder Mischungen hiervon
bezogen auf die Gesamtmenge des mindestens einen teilkristallinen Polyamids in einer Menge von 0,05 bis 10 Gew.-%, bevorzugt 0,1 bis 5 Gew.-%, besonders bevorzugt 0,4 bis 4 Gew.-% eingesetzt wird,
3 bis 6, bevorzugt 3 bis 4 umesterungsfähige Funktionalitäten aufweist, und/oder
ein Molekulargewicht von mindestens 600 g/mol aufweist.

3. Verfahren nach einem der vorhergehenden Ansprüche, **dadurch gekennzeichnet, dass** das mindestens eine mehrfunktionelle umesterungsfähige organische Phosphonit, organische Phosphit und/oder organische Phosphat ausgewählt ist aus der Gruppe bestehend aus den nachfolgend abgebildeten Verbindungen
(O)_{y}P(OR)₃,
[(RO)₂(O)_{y}P-O]_{z}X
[(RO)₂P]_{z}X
wobei jeweils unabhängig voneinander
y 0 oder 1 ist,
z 2, 3 oder 4 ist,
R bei jedem Auftreten gleich oder verschieden ist und ausgewählt ist aus der Gruppe bestehend aus linearen oder verzweigten Alkylresten, unsubstituierten oder substituierten aromatischen Resten, wobei jeweils zwei an demselben Phosphoratom angeordnete Reste (OR) auch über eine kovalente Bindung miteinander verbunden sein können, sowie
X ein z-wertiger Rest, der ausgewählt ist aus der Gruppe bestehend aus linearen oder verzweigten, ggf. heterosubstituierten Alkylresten, unsubstituierten oder substituierten aromatischen Resten,
wobei insbesondere
R 2,4-di-*tert*-Butylphenoxy, 2,6-di-*tert*-Butyl-4-methylphenoxy, 2,4-di-((1-methyl-1-phenyl)ethyl)phenoxy oder im Falle, dass zwei an demselben Phosphoratom angeordnete Reste (OR) auch über eine kovalente Bindung miteinander verbunden sind 3,3',5,5'-tetra-tert-butylbiphenyl-2,2'-dioxy ist, und
X ausgewählt ist aus der Gruppe bestehend aus 4,4'-Biphenyl, - (CH₂)₄C und Tri(2-ethyl)aminyl.

4. Verfahren nach einem der vorhergehenden Ansprüche, **dadurch gekennzeichnet, dass** die
Phosphite ausgewählt sind aus der Gruppe bestehend aus Triphenylphosphit, Tri(nonylphenyl)phosphit, Trilaurylphosphit, Trioctadecylphosphit, (2,4-Di-*tert*-butylphenyl)diethylphosphit, Tris-(2,4-di-*tert-*butylphenyl)phosphit, Tristearylsorbitoltriphosphit, Bis-(2,4-di-*tert-*butyl-6-methylphenyl)phosphit, Bis-(2,6-di-*tert*-butyl-4-methylphenyl)-phosphit, 2,2',2"-Nitrilo[triethyltris(3,3',5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl)phosphit, 3,9-Bis(2,4-di-*tert*-butylphenoxy)-2,4,8,10-tetraoxa-3,9-diphosphaspiro[5.5]undecan, 3,9-Bis(2,4-dicumylphenoxy)-2,4,8,10-tetraoxa-3,9-diphosphaspiro[5.5]undecan, 3,9-Bis[4-methyl-2,6-bis(2-methyl-2-propanyl)phenoxy]-2,4,8,10-tetraoxa-3,9-diphosphaspiro[5.5]undecan sowie Mischungen und Kombinationen hiervon,
die Phosphonite ausgewählt sind aus der Gruppe bestehend aus Tetrakis-(2,4-di-*tert*-butylphenyl)-4,4'-biphenyldiphosphonit, Tetrakis-(2,4-dimethylphenyl)-4,4'-biphenyldiphosphonit, Tetrakis(2,4-bis(1,1-dimethylpropyl)phenyl)-4,4'-biphenyldiphosphonit, sowie Mischungen hiervon, und
die Phosphate ausgewählt sind aus der Gruppe bestehend aus Tris(octadecyl)phosphat, Tris(dodecyl)phosphat, sowie Mischungen hiervon.

5. Verfahren nach einem der vorhergehenden Ansprüche, **dadurch gekennzeichnet, dass** der Mischung mindestens ein Umesterungskatalysator, bevorzugt Zinn-, Antimon- und/oder Titanverbindungen, wie z.B. Zinn-(II)-octoat zugesetzt wird.

6. Verfahren nach einem der vorhergehenden Ansprüche, **dadurch gekennzeichnet, dass** in Schritt b) sowohl das mindestens eine teilkristalline Polyamid als auch das mindestens eine mehrfunktionelle umesterungsfähige organische Phosphonit, organische Phosphit und/oder organische Phosphat geschmolzen wird.

7. Verfahren nach einem der vorhergehenden Ansprüche, **dadurch gekennzeichnet, dass** Schritt b)
bei Temperaturen von 230 bis 350 °C, bevorzugt 240 und 310 °C, besonders bevorzugt 270 bis 300 °C und/oder
über einen Zeitraum von 0,5 bis 60 min, bevorzugt 2 bis 10 min
durchgeführt wird.

8. Verfahren nach einem der vorhergehenden Ansprüche, **dadurch gekennzeichnet, dass** das mindestens eine teilkristalline Polyamid ausgewählt ist aus der Gruppe bestehend aus
aliphatischen Polyamiden, insbesondere PA 6, PA 66, PA610, PA 46, PA 410, PA 612, PA 1212, PA 1010, PA 10/12, PA 10, PA 11, PA 12,
teilaromatischen Polyamiden, abgeleitet von aromatischen Dicarbonsäuren , wie z.B. Terephthalsäure und/oder Isophthtalsäure und aliphatischen Diaminen, wie z.B. Hexamethylendiamin,
teilaromatischen Polyamiden, abgeleitet von aliphatischen Dicarbonsäuren, wie z.B. Adipunsäure und/oder Sebazinsäure und aromatischen Daiminen, wie z.B. 1,3- und/oder 1,4-Diaminobenzol,
Polyamidimide, abgeleitet von Tricarbonsäureanhydriden wie z.B. Trimellithsäureanhydrid und Diaminen, sowie
Mischungen oder Kombinationen hiervon.

9. Verfahren nach einem der vorhergehenden Ansprüche, **dadurch gekennzeichnet, dass** das mindestens eine teilkristalline Polyamid eine
Aminoendgruppenkonzentration von < 30 meq/kg und/oder
eine Carbonsäureendgruppenkonzentration von < 30 meq/kg
aufweist.

10. Verwendung von mehrfunktionellen umesterungsfähigen organischen Phosphoniten, organischen Phosphiten, organischen Phosphaten oder Mischungen aus mindestens zwei der zuvor genannten Verbindungen zur Erniedrigung der Kristallisationstemperatur von zumindest teilweise oder vollständig endgruppenblockierten teilkristallinen Polyamiden und/oder
zur Vernetzung und/oder Verzweigung von zumindest teilweise oder vollständig endgruppenblockierten teilkristallinen Polyamiden.

11. Polyamidformmasse, umfassend ein durch Reaktion mindestens eines mehrfunktionellen umesterungsfähigen organischen Phosphonits, organischen Phosphiten, organischen Phosphaten oder Mischungen aus mindestens zwei der zuvor genannten Verbindungen und mindestens einem zumindest teilweise oder vollständig endgruppenblockierten teilkristallinen Polyamid erhaltenen Reaktionsproduktes, wobei bei der Reaktion eine Umesterung des mindestens einen mehrfunktionellen umesterungsfähigen organischen Phosphonits, organischen Phosphits, organischen Phosphats oder Mischungen aus mindestens zwei der zuvor genannten Verbindungen bei gleichzeitiger Umamidierung mindestens eines teilkristallinen Polyamids erfolgt.

12. Polyamidformmasse nach vorhergehendem Anspruch, **dadurch gekennzeichnet, dass** das erhaltene Reaktionsprodukt ein verzweigtes Polyamid darstellt.

13. Polyamidformmasse nach einem der beiden vorhergehenden Ansprüche, **dadurch gekennzeichnet, dass** sie Zusatzstoffe, ausgewählt aus der Gruppe bestehend aus UV-Absorbern, Lichtstabilisatoren, Stabilisatoren, Hydroxylaminen, Benzofuranen, Metalldesaktivatoren, Füllstoffdesaktivatoren, Flammschutzmittel, Schlagzähigkeitsverbesserer, Weichmacher, Gleitmittel, Rheologiemodifikatoren, Verarbeitungshilfsmittel, Pigmenten, Farbstoffen, Füllstoffen, Verstärkungsstoffen, optischen Aufhelleren, antimikrobiellen Wirkstoffen, Antistatika, Slipmitteln, Antiblockmitteln, Kopplungsmitteln, Dispergiermitteln, Kompatibilisatoren, Sauerstofffängern, Säurefängern, Markierungsmitteln, Antifoggingmittlen sowie Mischungen und Kombinationen aus mindestens zwei der zuvor genannten Zusatzstoffen.

14. Polyamidformmasse nach einem der Ansprüche 11 bis 13, **dadurch gekennzeichnet, dass** sie frei von Nukleierungsmitteln ist.

## Claims

1. A method for lowering the crystallization temperature of semi-crystalline polyamides, in which
a) at least one at least partially or completely end-blocked semi-crystalline polyamide or mixtures of at least two semi-crystalline polyamides is mixed with at least one multifunctional transesterifiable organic phosphonite, organic phosphite, organic phosphate or mixtures of at least two of the aforementioned compounds,
b) the mixture formed is converted into a melt, wherein a transesterification of the at least one polyfunctional transesterifiable organic phosphonite, organic phosphite, organic phosphate or mixtures of at least two of the aforementioned compounds with simultaneous transamidation of the at least one semi-crystalline polyamide occurs, and finally
c) the mixture is cooled down.

2. The method according to claim 1, **characterized in that** the at least one polyfunctional transesterifiable organic phosphonite, organic phosphite, organic phosphate or mixtures thereof
is used in an amount of 0.05 to 10% by weight, preferably 0.1 to 5% by weight, particularly preferably 0.4 to 4% by weight, based on the total amount of the at least one semi-crystalline polyamide,
has 3 to 6, preferably 3 to 4 transesterification-capable functionalities, and/or
has a molecular weight of at least 600 g/mol.

3. The method according to one of the preceding claims, **characterized in that** the at least one polyfunctional transesterifiable organic phosphonite, organic phosphite and/or organic phosphate is selected from the group consisting of the compounds shown below
(O)_{y}P(OR)₃,
[(RO)₂(O)_{y}P-O]_{z}X
[(RO)₂P]_{z}X
wherein in each case independently of one another
y is 0 or 1,
z is 2, 3 or 4,
R is the same or different in each occurrence and is selected from the group consisting of linear or branched alkyl radicals, unsubstituted or substituted aromatic radicals, where in each case two radicals (OR) arranged on the same phosphorus atom can also be linked to one another via a covalent bond, and
X is a z-valent radical selected from the group consisting of linear or branched, optionally heterosubstituted alkyl radicals, unsubstituted or substituted aromatic radicals,
wherein in particular
R is *2,4-di-tert-butylphenoxy, 2,6-di-tert-butyl-4-methylphenoxy,* 2,4-di-((1-methyl-1-phenyl)ethyl)phenoxy or, in the case where two radicals (OR) located on the same phosphorus atom are also linked to each other via a covalent bond, 3,3',5,5*'-tetra-tert-butylbiphenyl-2,2'-dioxy,* and
X is selected from the group consisting of 4,4'-biphenyl, - (CH₂)₄C and tri(2-ethyl)aminyl.

4. The method according to one of the preceding claims, **characterized in that** the
phosphites are selected from the group consisting of triphenylphosphite, tri(nonylphenyl)phosphite, trilaurylphosphite, trioctadecylphosphite, (2,4*-di-tert-butylphenyl*)diethylphosphite, tris-(2,4*-di-*tert*-butylphenyl*)phosphite, tristearylsorbitol triphosphite, bis-(2,4-*di*-*tert*-*butyl-6-methylphenyl*)phosphite, bis-(2,6-d*i-tert-butyl-4-methylphenyl*)phosphite, 2,2',2"-nitrilo[triethyltris(3,3',5,5'-tetra-*tert-butyl*-1,1'-biphenyl-2,2'-diyl)phosphite], 2-ethylhexyl(3,3' 5,5'-tetra-*tert*-butyl-1,1'-biphenyl-2,2'-diyl)phosphite, 3,9-bis(2,4-di-*tert-*butylphenoxy)-2,4,8,10-tetraoxa-3,9-diphosphaspiro[5.5]undecane, 3,9-bis(2,4-dicumylphenoxy)-2,4,8,10-tetraoxa-3,9-diphosphaspiro[5.5]undecane, 3,9-bis[4-methyl-2,6-bis(2-methyl-2-propanyl)phenoxy]-2,4,8,10-tetraoxa-3,9-diphosphaspiro[5.5]undecane and mixtures and combinations thereof,
the phosphonites are selected from the group consisting of tetrakis-(2,4-di-*tert*-butylphenyl)-4,4'-biphenyldiphosphonite, tetrakis-(2,4-dimethylphenyl)-4,4'-biphenyldiphosphonite, tetrakis(2,4-bis(1,1-dime-thylpropyl)phenyl)-4,4'-biphenyldiphosphonite, and mixtures thereof, and
the phosphates are selected from the group consisting of tris(octadecyl)phosphate, tris(dodecyl)phosphate, and mixtures thereof.

5. The method according to one of the preceding claims, **characterized in that** at least one transesterification catalyst, preferably tin, antimony and/or titanium compounds, such as tin (II) octoate, is added to the mixture.

6. The method according to one of the preceding claims, **characterized in that** in step b) both the at least one semi-crystalline polyamide and the at least one polyfunctional transesterifiable organic phosphonite, organic phosphite and/or organic phosphate are melted.

7. The method according to one of the preceding claims, **characterized in that** step b) is carried out
at temperatures of 230 to 350 °C, preferably 240 and 310 °C, particularly preferably 270 to 300 °C and/or
is carried out over a period of 0.5 to 60 min, preferably 2 to 10 min.

8. The method according to one of the preceding claims, **characterized in that** the at least one semi-crystalline polyamide is selected from the group consisting of
aliphatic polyamides, in particular PA 6, PA 66, PA610, PA 46, PA 410, PA 612, PA 1212, PA 1010, PA 10/12, PA 10, PA 11, PA 12,
partially aromatic polyamides derived from aromatic dicarboxylic acids, such as terephthalic acid and/or isophthalic acid and aliphatic diamines, such as hexamethylenediamine,
partially aromatic polyamides derived from aliphatic dicarboxylic acids, such as adipic acid and/or sebacic acid and aromatic daimines, such as 1,3- and/or 1,4-diaminobenzene,
Polyamide imides derived from tricarboxylic acid anhydrides such as trimellitic acid anhydride and diamines, and
mixtures or combinations thereof.

9. The method according to one of the preceding claims, **characterized in that** the at least one semi-crystalline polyamide has
an amino end group concentration of < 30 meq/kg and/or
a carboxylic acid end group concentration of < 30 meq/kg.

10. A use of multifunctional transesterifiable organic phosphonites, organic phosphites, organic phosphates or mixtures of at least two of the aforementioned compounds for lowering the crystallization temperature of at least partially or completely end-group-blocked semi-crystalline polyamides, and/or
for crosslinking and/or branching of at least partially or completely end-blocked semi-crystalline polyamides.

11. A polyamide molding composition comprising a reaction product obtained by reacting at least one polyfunctional transesterifiable organic phosphonite, organic phosphites, organic phosphates or mixtures of at least two of the aforementioned compounds and at least one at least partially or completely endblocked semi-crystalline polyamide, wherein the reaction involves transesterification of the at least one polyfunctional transesterifiable organic phosphonite, organic phosphite, organic phosphate or mixtures of at least two of the aforementioned compounds with simultaneous transamidation of at least one semi-crystalline polyamide.

12. The polyamide moulding composition according to the preceding claim, **characterized in that** the reaction product obtained is a branched polyamide.

13. The polyamide molding compound according to one of the two preceding claims, **characterized in that** it contains additives selected from the group consisting of UV absorbers, light stabilizers, stabilizers, hydroxylamines, benzofurans, metal deactivators, filler deactivators, flame retardants, impact strength improvers, plasticizers, lubricants, rheology modifiers, processing aids, pigments, dyes, fillers, reinforcing agents, optical brighteners, antimicrobial agents, antistatic agents, slip agents, antiblocking agents, coupling agents, dispersing agents, compatibilizers, oxygen scavengers, acid scavengers, marking agents, antifogging agents and mixtures and combinations of at least two of the aforementioned additives.

14. A polyamide molding compound according to any one of claims 11 to 13, **characterized in that** it is free of nucleating agents.

## Revendications

1. Procédé d'abaissement de la température de cristallisation de polyamides semi-cristallins, dans lequel
a) au moins un polyamide semi-cristallin au moins partiellement ou totalement bloqué par des groupes terminaux ou des mélanges d'au moins deux polyamides semi-cristallins avec au moins un phosphonite organique, phosphite organique, phosphate organique, polyfonctionnel transestérifiable ou un mélange d'au moins deux des composés mentionnés ci-dessus,
b) le mélange formé est transformé en une masse fondue, dans lequel la transestérification du au moins un phosphonite organique, phosphite organique, phosphate organique, polyfonctionnel transestérifiable ou des mélanges d'au moins deux des composés mentionnés ci-dessus a lieu avec une transamidation simultanée du au moins un polyamide semi-cristallin, et enfin
c) le mélange est refroidi.

2. Procédé selon la revendication 1, **caractérisé en ce que** le au moins un phosphonite organique, phosphite organique, phosphate organique, polyfonctionnel transestérifiable ou un mélange de ceux-ci
est utilisé en une quantité comprise entre 0,05 et 10 % en poids, de manière préférée comprise entre 0,1 et 5 % en poids, de manière particulièrement préférée comprise entre 0,4 et 4 % en poids, par rapport à la quantité totale du au moins un polyamide partiellement cristallin,
présente entre 3 et 6, de manière préférée entre 3 et 4 fonctionnalités transestérifiables, et/ou
présente un poids moléculaire d'au moins 600 g/mol.

3. Procédé selon l'une quelconque des revendications précédentes, **caractérisé en ce que** le au moins un phosphonite organique, phosphite organique, phosphate organique, polyfonctionnel transestérifiable est choisi dans le groupe constitué des composés représentés ci-dessous
(O)_{y}P(OR)₃,
[(RO)₂(O)_{y}P-O]_{z}X
[(RO)₂P]_{z}X
dans lequel, de manière respectivement indépendante les uns des autres,
y est égal à 0 ou 1,
z est égal à 2, 3 ou 4,
R est identique ou différent à chaque occurrence et est choisi dans le groupe constitué des radicaux alkyle linéaires ou ramifiés, des radicaux aromatiques non substitués ou substitués, dans lequel deux radicaux (OR) agencés sur le même atome de phosphore peuvent respectivement être liés également l'un à l'autre par une liaison covalente, et
X est un radical de valence Z choisi dans le groupe constitué des radicaux alkyle linéaires ou ramifiés, éventuellement hétérosubstitués, des radicaux aromatiques non substitués ou substitués,
dans lequel en particulier
R est du 2,4-di-*tert*-butylphénoxy, du 2,6-di-*tert*-butyl-4-méthylphénoxy, du 2,4-di-((1-méthyl-1-phényl)éthyl)phénoxy ou, dans le cas où deux résidus (OR) agencés sur le même atome de phosphore sont également liés l'un à l'autre par une liaison covalente, du 3,3',5,5'-tétra-*tert*-butylbiphényl-2,2'-dioxy, et
X est choisi dans le groupe constitué du 4,4'-biphényle, du (CH₂)₄C et du tri(2-éthyl)aminyle.

4. Procédé selon l'une quelconque des revendications précédentes, **caractérisé en ce que**
les phosphites sont choisis dans le groupe constitué du phosphite de triphényle, du phosphite de tri(nonylphényle), du phosphite de trilauryle, du phosphite de trioctadécyle, du diéthylphosphite de (2,4-di-*tert*-butylphényle), du phosphite de tris(2,4-di-*tert*-butylphényle), du triphosphite de tristéarylsorbitol, du phosphite de bis(2,4-di-*tert*-butyl-6-méthylphényle), du phosphite de bis(2,6-di-*tert*-butyl-4-méthylphényle), du phosphite de 2,2',2"-nitrilo[triéthyltris(3,3',5,5'-tétra-*tert*-butyl-1,1'-biphényl-2,2'-diyle), du phosphite de 2-éthylhexyle(3,3',5,5'-tétra-*tert*-butyl-1,1'-biphényl-2,2'-diyle), du 3,9-bis(2,4-di-*tert*-butylphénoxy)-2,4,8,10-tétraoxa-3,9-diphosphaspiro-[5.5]undécane et du 3,9-bis-(2,4-dicumylphénoxy)-2,4,8,10-tétraoxa-3,9-diphosphaspiro[5.5]undécane, du 3,9-bis[4-méthyl-2,6-bis(2-méthyl-2-propanyle)phénoxy]-2,4,8,10-tétraoxa-3,9-diphosphaspiro[5.5]undécane et leurs mélanges et combinaisons,
les phosphonites sont choisis dans le groupe constitué du tétrakis-(2,4-di-*tert*-butylphényl)-4,4'-biphényldiphosphonite, du tétrakis-(2,4diméthylphényl)-4,4'-biphényldiphosphonite, du tétrakis(2,4-bis(1,1-diméthylpropyl)phényl)-4,4'-biphényldiphosphonite, et leurs mélanges, et
les phosphates sont choisis dans le groupe constitué du phosphate de tris(octadécyle), du phosphate de tris(dodécyle), et leurs mélanges.

5. Procédé selon l'une quelconque des revendications précédentes, **caractérisé en ce qu'**au moins un catalyseur de transestérification, de manière préférée des composés d'étain, d'antimoine et/ou de titane, tels que l'octoate stanneux, est ajouté au mélange.

6. Procédé selon l'une quelconque des revendications précédentes, **caractérisé en ce qu'**à l'étape b), à la fois le au moins un polyamide semi-cristallin et le au moins un phosphonite organique, phosphite organique et/ou phosphate organique, polyfonctionnel transestérifiable sont fondus.

7. Procédé selon l'une quelconque des revendications précédentes, **caractérisé en ce que** l'étape b) est mise en œuvre
à des températures comprises entre 230 et 350 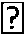 , de manière préférée comprise entre 240 et 310 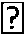 , de manière particulièrement préférée comprise entre 270 et 300 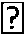 et/ou
sur une période comprise entre 0,5 et 60 minutes, de manière préférée comprise entre 2 et 10 minutes.

8. Procédé selon l'une quelconque des revendications précédentes, **caractérisé en ce que** le au moins un polyamide semi-cristallin est choisi dans le groupe constitué des
polyamides aliphatiques, en particulier PA 6, PA 66, PA 610, PA 46, PA 410, PA 612, PA 1212, PA 1010, PA 10/12, PA 10, PA 11, PA 12,
des polyamides partiellement aromatiques dérivés d'acides dicarboxyliques aromatiques, tels que l'acide téréphtalique et/ou l'acide isophtalique et des diamines aliphatiques, telles que l'hexaméthylènediamine,
des polyamides partiellement aromatiques dérivés d'acides dicarboxyliques aliphatiques, tels que l'acide adipique et/ou l'acide sébacique et des diamines aromatiques, tels que le 1,3-diaminobenzène et/ou le 1,4-diaminobenzène,
des polyamidimides dérivés d'anhydrides d'acides tricarboxyliques tels que l'anhydride trimellitique et des diamines, ainsi que
leurs mélanges ou combinaisons.

9. Procédé selon l'une quelconque des revendications précédentes, **caractérisé en ce que** le au moins un polyamide semi-cristallin présente
une concentration en groupes terminaux amino qui est < 30 meq/kg et/ou
une concentration en groupes terminaux acide carboxylique qui est < 30 meq/kg.

10. Utilisation de phosphonites organiques, phosphites organiques, phosphates organiques, polyfonctionnels transestérifiables ou de mélanges d'au moins deux des composés mentionnés ci-dessus afin d'abaisser la température de cristallisation de polyamides semi-cristallins au moins partiellement ou complètement bloqués par des groupes terminaux et/ou
Afin de réticuler et/ou ramifier des polyamides semi-cristallins au moins partiellement ou complètement bloqués par des groupes terminaux.

11. Masse à mouler à base de polyamide, comprenant un produit de réaction obtenu par réaction d'au moins un phosphonite organique, phosphite organique, phosphate organique, polyfonctionnel transestérifiable ou de mélanges d'au moins deux des composés mentionnés ci-dessus et d'au moins un polyamide semi-cristallin au moins partiellement ou totalement bloqué par des groupes terminaux, dans laquelle une transestérification du au moins un phosphonite organique, phosphite organique, phosphate organique, polyfonctionnel transestérifiable ou de mélanges d'au moins deux des composés mentionnés ci-dessus a lieu lors de la réaction, avec transamidation simultanée d'au moins un polyamide semi-cristallin.

12. Masse à mouler à base de polyamide selon la revendication précédente, **caractérisée en ce que** le produit de réaction obtenu est un polyamide ramifié.

13. Masse à mouler à base de polyamide selon l'une quelconque des deux revendications précédentes, **caractérisée en ce qu'**elle contient des additifs choisis dans le groupe constitué des absorbeurs d'UV, des stabilisateurs de lumière, des stabilisants, des hydroxylamines, des benzofuranes, des désactivateurs de métaux, des désactivateurs de charges, des agents ignifuges, des agents d'amélioration de la résistance aux chocs, des plastifiants, des lubrifiants, des modificateurs de rhéologie, des auxiliaires de traitement, des pigments, des colorants, des charges, des renforçateurs, des azurants optiques, des agents antimicrobiens, des agents antistatiques, des agents de glissement, des agents antiblocage, des agents de couplage, des dispersants, des compatibilisants, des pièges à oxygène, des pièges à acide, des agents de marquage, des agents anti-buée ainsi que des mélanges et des combinaisons d'au moins deux des additifs mentionnés ci-dessus.

14. Masse à mouler à base de polyamide selon l'une quelconque des revendications 11 à 13, **caractérisée en ce qu'**elle est exempte d'agents de nucléation.
